# EUROPÄISCHE PATENTSCHRIFT

(11) **EP 1 046 019 B1**
(45) Veröffentlichungstag und Bekanntmachung des Hinweises auf die Patenterteilung: **29.12.2004**
(21) Anmeldenummer: 99947223.6
(22) Anmeldetag: 16.07.1999
(51) Int. Cl.: G01C 21/20, G09B 29/10

(54) **NAVIGATIONSSYSTEM UND NAVIGATIONSDATENTRÄGER**
NAVIGATION SYSTEM AND NAVIGATION DATA CARRIER
SYSTEME DE NAVIGATION ET SUPPORT DE DONNEES DE NAVIGATION

(30) Priorität: 16.10.1998 DE 19847730
(43) Veröffentlichungstag der Anmeldung: 25.10.2000
(73) Patentinhaber: ROBERT BOSCH GMBH, 70442 Stuttgart (DE)
(72) Erfinder: GÄRTNER, Ulrich, D-31171 Nordstemmen (DE); MINDL, Anton, D-58515 Lüdenscheid (DE)
(86) Internationale Anmeldenummer: PCT/DE1999/002205
(87) Internationale Veröffentlichungsnummer: WO 2000/023766

(56) Entgegenhaltungen:
- EP-A- 0 768 638
- DE-A- 19 620 845

## Beschreibung

### Technisches Gebiet

Die Erfindung betrifft ein Navigationssystem und ein Verfahren zu dessen Betrieb mit einem Navigationsrechner, einem Datenträgerlesegerät und einem Navigationsdatenträger, wobei auf dem Navigationsdatenträger gespeicherte Navigationsdaten möglicher Ziele mittels des Datenträgerlesegerät auslesbar und in einen Arbeitsspeicher des Navigationsrechners einlesbar sind, gemäß dem jeweiligen Oberbegriff der Ansprüche 1 und 4. Die Erfindung betrifft ferner einen Navigationsdatenträger mit auf diesem gespeicherten Navigationsdaten sowie ein Verfahren zu dessen Erstellung, gemäß dem jeweiligen Oberbegriff der Ansprüche 7 und 10.

### Stand der Technik

In Fortbewegungsmitteln, wie beispielsweise Kraftfahrzeugen, Flugzeugen oder Schiffen, fest installierte Navigationssysteme leiten einen Führer des Fortbewegungsmittels schnell, einfach und sicher von einem aktuellen Standort zu einem gewünschten Zielort, ohne dass der Führer des Fortbewegungsmittels vorher aufwendig eine Route planen und entsprechendes Kartenmaterial erwerben muss. Hierzu liegen entsprechende, beispielsweise auf Karten, Landkarten oder Straßenkarten basierende, Navigationsdaten in dem Navigationssystem beispielsweise auf CD-ROM gespeichert vor. Das Navigationsgerät nutzt beispielsweise GPS (Global Positioning System) um einen momentanen Standort festzustellen und entsprechende Navigationsanweisungen zu berechnen, welche zu einem vorbestimmten Ziel führen. Die Navigationsdaten beinhalten dabei vorzugsweise Daten über Straßen und Wege für Kraftfahrzeuge.

Bevor jedoch das Navigationssystem seine Aufgabe übernehmen und eine Route vom Standort zum Zielort berechnen kann, ist es notwendig, dass ein Benutzer den gewünschten Zielort und ggf. bei Navigationsgeräten ohne GPS auch den aktuellen Standort eingibt. Dies erfolgt beispielsweise über ein Sprachbediensystem. Bei derartiger sprachbedienter Navigation mittels Buchstabieren ist ein sogn. Listenmatching notwendig. Darunter versteht man einen Vergleich einer Buchstaben-Hypothese eines Spracherkenners mit möglichen Zielen, wie beispielsweise Städte, Straßennamen oder Sonderzielen in der Liste möglicher Ziele. Für das Listenmatching dienen einerseits Daten aus dem Sprachbediensystem, die vorerwähnten Hypothesen, und anderseits eine Liste möglicher Ziele, welche beispielsweise auf einer Navigations-CD-ROM als Eingangsdaten gespeichert ist.

Bei herkömmlichen Spracherkennungssystemen wird, wie sie z.B. aus EP-A-0768638 bekannt sind, die Liste möglicher Ziele in einem Arbeitsspeicher eines Rechners geladen und dort vorgehalten. Dies hat jedoch den Nachteil eines hohen Speicherplatzbedarfes und ist daher sehr unwirtschaftlich, da mit derartigen Spracherkennungssystemen ausgestattet Navigationssysteme sehr kostenintensiv und daher auf dem Markt schlecht konkurrenzfähig sind. Es ist daher notwendig, die Daten für den Listenvergleich von der Navigations-CD-ROM in den Arbeitsspeicher des Rechners des Navigationssystems nur zu den Zeitpunkten zu übertragen, zu denen die Liste möglicher Ziele tatsächlich benötigt wird. Da jedoch die Daten auf der Navigations-CD-ROM über entsprechende Indexverweise sortiert vorliegen, ist das Auslesen der Daten von der Navigations-CD-ROM sehr zeitaufwendig, da ein Lesekopf eines CD-ROM-Laufwerkes immer wieder zwischen der Indextabelle und den eigentlichen Daten hin- und hergefahren und entsprechend jeweils neu positioniert werden muss (siehe z.B. DE-A-19620845). Im Ergebnis kommt es zu langen Transferzeiten der Liste der möglichen Ziele von der Navigations-CD-ROM in den Arbeitsspeicher des Rechners des Navigationssystems.

### Darstellung der Erfindung, Aufgabe, Lösung, Vorteile

Es ist Aufgabe der vorliegenden Erfindung, ein verbessertes Navigationssystem, ein verbessertes Verfahren zum Betreiben desselben, einen verbesserten Navigationsdatenträger der o.g. Art sowie ein verbesserte Verfahren o.g. Art zum Beschreiben eines Navigationsdatenträgers derart zur Verfügung zu stellen, wobei die obengenannten Nachteile beseitigt und ein kostengünstiger Einsatz eines Sprachsteuersystems für ein Navigationssystem erzielt wird.

Diese Aufgabe wird durch ein Navigationssystem der o.g. Art mit den in Anspruch 1 gekennzeichneten Merkmalen, durch ein Verfahren zu dessen Betrieb der o.g. Art mit den in Anspruch 4 gekennzeichneten Merkmalen, durch einen Navigationsdatenträger der o.g. Art mit den in Anspruch 7 gekennzeichneten Merkmalen sowie durch ein Verfahren der o.g. Art zum Beschreiben eines Navigationsdatenträgers mit den in Anspruch 10 gekennzeichneten Merkmalen gelöst.

Dazu ist es bei einem Navigationssystem erfindungsgemäß vorgesehen, dass der Navigationsdatenträger derart ausgebildet ist, dass die Navigationsdaten auf diesem in sequentieller, in einem Lesevorgang auslesbarer Form abgespeichert sind.

Ferner ist es bei einem Verfahren zum Betrieb dieses Navigationssystems erfindungsgemäß vorgesehen, dass die Navigationsdaten von dem Navigationsdatenträger sequentiell in einem einzigen Lesevorgang ausgelesen und in den Arbeitsspeicher des Navigationsrechners eingelesen werden.

Dies hat den Vorteil, dass die Navigationsdaten nacheinander und ohne das Erfordernis einer Neupositionierung eines Lesekopfes des Datenträgerlesegerät vollständig auslesbar sind, so dass sich eine besonders kurze Transferzeit der Navigationsdaten von dem Navigationsdatenträger in den Arbeitsspeicher des Navigationsrechners ergibt. Hierdurch ist es möglich, in einem Navigationssystem ein Sprachsteuersystem zu integrieren, in dem die Navigationsdaten für die Spracherkennung nur temporär im Arbeitsspeicher abgelegt sind und ansonsten dieser Arbeitsspeicher für andere Aufgabe bzw. Prozesse des Navigationssystems zur Verfügung steht. Somit ist in erheblichem Maß Arbeitsspeicher eingespart, wodurch sich ein kostengünstigeres Navigationssystem ergibt.

Eine weitere Zeiteinsparung bei dem Transfer der Navigationsdaten von dem Navigationsdatenträger in den Arbeitsspeicher des Navigationsrechners erzielt man dadurch, dass die Navigationsdaten auf dem Navigationsdatenträger in komprimierter Form gespeichert sind.

In einer besonders bevorzugten Ausführungsform ist das Datenträgerlesegerät ein CD-ROM-Laufwerk und der Datenträger eine Navigations-CD-ROM.

Ein erfindungsgemäßer Navigationsdatenträger der o.g. Art , welcher insbesondere eine Navigations-CD-ROM ist, ist dadurch gekennzeichnet, dass die Navigationsdaten auf dem Navigationsdatenträger derart sequentiell abgespeichert sind, dass die Navigationsdaten sequentiell in einem einzigen Lesevorgang auslesbar sind.

Ein Verfahren zum Beschreiben des vorgenannten Navigationsdatenträgers ist erfindungsgemäß dadurch gekennzeichnet, dass die Navigationsdaten sequentiell unmittelbar aufeinander folgend auf dem Navigationsdatenträger abgespeichert werden.

Dies hat den Vorteil, dass die Daten von einem Datenträgerlesegerät eines Navigationssystems direkt sequentiell ohne Absetzen bzw. neue Positionierung eines Lesekopfes vollständig in einem einzigen Lesevorgang ausgelesen werden können.

Durch eine Kompression der Navigationsdaten vor dem Schreiben auf den Navigationsdatenträger ist es in vorteilhafter Weise möglich, dass beim Auslesen der Navigationsdaten durch ein Datenträgerlesegerät des Navigationssystem die Navigationsdaten direkt in den Arbeitsspeicher des Navigationsrechners ohne weitere Konvertierung geschrieben werden können. Dies reduziert zusätzlich eine für den Transfer der Navigationsdaten von dem Navigationsdatenträger in den Arbeitsspeicher des Navigationsrechners erforderliche Zeit.

Die Erfindung geht dabei von der Erkenntnis aus, dass die Abspeicherung von Daten auf einer CD-ROM mittels einer Indexliste das Ziel verfolgt, mit einem Lesekopf eines CD-ROM-Laufwerkes an jeder beliebigen Stelle der Daten auf der CD-ROM aufsetzen zu können und auch einen gewünschten Auszug von Daten auf der CD-ROM auslesen zu können, ohne alle auf der Spur der CD-ROM zuvor gespeicherten Daten lesen zu müssen. Dies ist jedoch für die Anwendung einer Navigations-CD-ROM in einem Navigationssystem mit Sprachsteuersystem nicht erforderlich, da hier für die Spracherkennung ohnehin der gesamte Inhalt der Navigations-CD-ROM temporär in den Arbeitsspeicher des Rechners des Navigationssystem einzulesen ist.

### Kurze Beschreibung der Zeichnungen

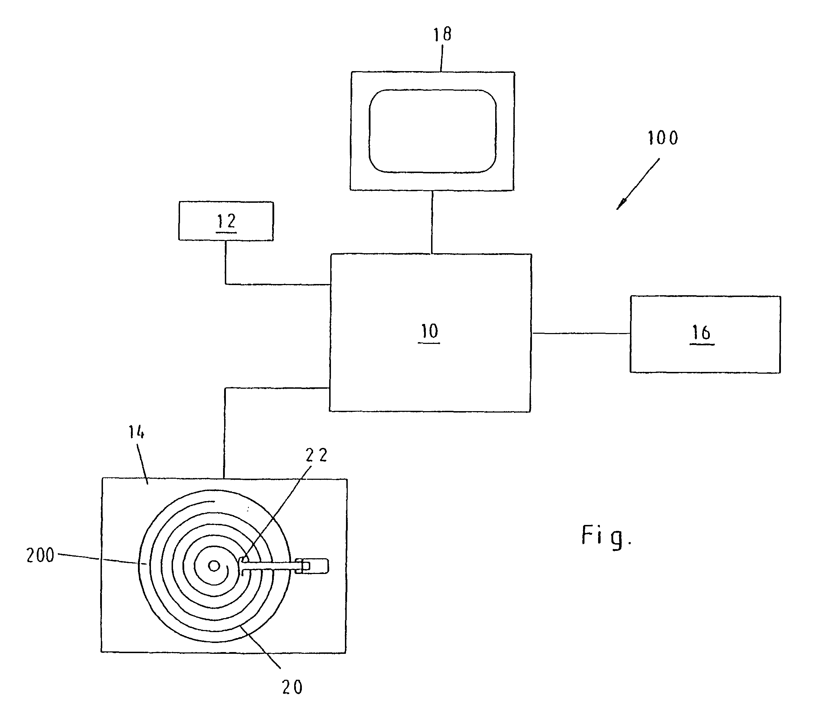

Nachstehend wird die Erfindung anhand der beigefügten Zeichnung näher erläutert. Diese zeigt in der einzigen Figur ein schematisches Blockschaltbild eines erfindungsgemäßen Navigationssystems mit einem erfindungsgemäßen Navigationsdatenträger.

### Bester Weg zur Ausführung der Erfindung

Die einzige Figur zeigt eine bevorzugte Ausführungsform eines erfindungsgemäßen Navigationssystems 100 mit einem Navigationsrechner 10, einer Audiokomponente 12, wie beispielsweise ein Radio oder ein Kassettenabspielgerät, einem CD-ROM-Laufwerk 14, einem Navigationsdatenträger 200 in Form einer Navigations-CD-ROM sowie einem Sprachsteuersystem 16. Der Navigationsrechner 10 erhält von dem Sprachsteuersystem entsprechende Daten von Spracheingaben, welche mit den aus der Navigations-CD-ROM 200 in einen nicht dargestellten Arbeitsspeicher geladenen Navigationsdaten verglichen werden. Bei Übereinstimmung wird ein entsprechender Zielort und ggf. ein Standort als erkannt abgespeichert und der Navigationsrechner 10 entfernt aus seinem Arbeitsspeicher die zuvor geladenen Navigationsdaten der Navigations-CD-ROM 200 und nutzt den Arbeitsspeicher statt dessen für die nachfolgende Routenberechnung vom Standort zum erkannten Zielort. Auf einem Display 18 des Navigationssystems 100 gibt der Navigationsrechner 10 entsprechende Navigationsanweisungen an einen Benutzer des Navigationssystems 100.

Die Navigationsdaten, wie beispielsweise Städte- und Straßennamen, sind in komprimierter Form und sequentiell direkt aufeinander folgend auf der Navigations-CD-ROM 200 auf der Spur 20 abgespeichert. Dadurch können diese von dem CD-ROM-Laufwerk 14 ohne Zuhilfenahme einer Indextabelle direkt aufeinander folgend in einem einzigen Lesevorgang ohne einen Lesekopf 22 auch nur einmal abzusetzen und neu positionieren zu müssen ausgelesen werden. Da die Navigationsdaten bereits komprimiert sind müssen diese auch nicht mehr in ein für ein Listenmatching notwendiges Format konvertiert werden sondern können direkt in den Arbeitsspeicher des Navigationsrechner hinein geschrieben werden.

Im Ergebnis wird ein deutlich kürzerer Zeitraum für den Transfer der Navigationsdaten von der Navigations-CD-ROM 200 in den Arbeitsspeicher des Navigationsrechners benötigt, wodurch der kostengünstige Einsatz eines Sprachbediensystems in einem Navigationssystem möglich wird. Statt nämlich einen Arbeitsspeicher für die vollständigen Navigationsdaten vorsehen zu müssen, welcher ansonsten ungenutzt bleiben würde, können die Navigationsdaten schnell temporär in den Arbeitsspeicher des Navigationsrechners eingelesen und nach der Spracherkennung wieder gelöscht werden. Ein permanentes Abspeichern der Navigationsdaten im Arbeitsspeicher des Navigationsrechners ist somit nicht mehr erforderlich, wodurch bei der Implementation eines Sprachsteuersystems erheblich Speicherplatz eingespart wird.

Die Daten für das Listenmatching werden beispielsweise mittels eines Datenkompressionsalgorithmus komprimiert. Diese komprimierten Daten werden auf der Navigations-CD-ROM in sequentieller Folge abgelegt, so dass der Lesevorgang ohne neue Positionierung des Lesekopfes des CD-ROM-Laufwerkes erfolgen kann. Damit besteht die Möglichkeit diese Daten in einer für den Datentransfer minimalen Zeit zu übertragen.

Das CD-ROM-Laufwerk 14 ist in der einzigen Fig. lediglich beispielhaft als abgesetzte, zusätzliche Komponente dargestellt. Alternativ kann das CD-ROM-Laufwerk 14 auch in die Audiokomponente 12 integriert sein.

## Patentansprüche

1. Navigationssystem (100) mit einem Navigationsrechner (10), einem Datenträgerlesegerät (14) und einem Navigationsdatenträger (200), wobei auf dem Navigationsdatenträger (200) gespeicherte Navigationsdaten möglicher Ziele mittels des Datenträgerlesegerät (14) auslesbar und in einen Arbeitsspeicher des Navigationsrechners (10) einlesbar sind,
**dadurch gekennzeichnet, dass**
der Navigationsdatenträger (200) derart ausgebildet ist, dass die Navigationsdaten auf diesem in sequentieller, in einem einzigen Lesevorgang auslesbarer Form abgespeichert sind.

2. Navigationssystem (100) nach Anspruch 1,
**dadurch gekennzeichnet, dass**
die Navigationsdaten auf dem Navigationsdatenträger (200) in komprimierter Form gespeichert sind.

3. Navigationssystem (100) nach Anspruch 1 oder 2,
**dadurch gekennzeichnet, dass**
das Datenträgerlesegerät (14) ein CD-ROM-Laufwerk und der Navigationsdatenträger (200) eine Navigations-CD-ROM ist.

4. Verfahren zum Betreiben eines Navigationssystems (100) mit einem Navigationsrechner (10), einem Datenträgerlesegerät (14) und einem Navigationsdatenträger (200), wobei auf dem Navigationsdatenträger gespeicherte Navigationsdaten möglicher Ziele mittels des Datenträgerlesegerät ausgelesen und in einen Arbeitsspeicher des Navigationsrechners übertragen werden,
**dadurch gekennzeichnet, dass**
die Navigationsdaten von dem Navigationsdatenträger sequentiell in einem einzigen Lesevorgang ausgelesen und in den Arbeitsspeicher des Navigationsrechners eingelesen werden.

5. Verfahren nach Anspruch 4,
**dadurch gekennzeichnet, dass**
die Navigationsdaten auf dem Navigationsdatenträger in komprimierter Form gespeichert werden.

6. Verfahren nach Anspruch 4 oder 5,
**dadurch gekennzeichnet, dass**
als Datenträgerlesegerät ein CD-ROM-Laufwerk und als Datenträger eine Navigations-CD-ROM verwendet wird.

7. Navigationsdatenträger (200) mit auf diesem gespeicherten Navigationsdaten,
**dadurch gekennzeichnet, dass**
die Navigationsdaten auf dem Navigationsdatenträger (200) derart sequentiell abgespeichert sind, dass die Navigationsdaten sequentiell in einem einzigen Lesevorgang auslesbar sind.

8. Navigationsdatenträger (200) nach Anspruch 8,
**dadurch gekennzeichnet, dass**
dieser eine Navigations-CD-ROM ist.

9. Navigationsdatenträger (200) nach Anspruch 8 oder 9,
**dadurch gekennzeichnet, dass**
die Navigationsdaten auf dem Navigationsdatenträger (200) komprimiert abgespeichert sind.

10. Verfahren zum Beschreiben eines Navigationsdatenträgers mit Navigationsdaten,
**dadurch gekennzeichnet, dass**
die Navigationsdaten sequentiell unmittelbar aufeinander folgend, in einem einzigen Lesevorgang auslesbarer Form auf dem Navigationsdatenträger abgespeichert werden.

11. Verfahren nach Anspruch 10,
**dadurch gekennzeichnet, dass**
der Navigationsdatenträger eine Navigations-CD-ROM ist.

12. Verfahren nach Anspruch 10 oder 11,
**dadurch gekennzeichnet, dass**
die Navigationsdaten vor dem Schreiben auf den Navigationsdatenträger komprimiert werden.

## Claims

1. Navigation system (100) having a navigation computer (10), a data storage medium reader (14) and a navigation data storage medium (200), in which navigation data for possible targets which is stored in the navigation data storage medium (200) can be read by means of the data storage medium reader (14) and can be written to a main memory of the navigation computer (10),
**characterized in that**
the navigation data storage medium (200) is designed such that the navigation data is stored in it in a sequential form which can be read in a single reading process.

2. Navigation system (100) according to Claim 1,
**characterized in that**
the navigation data is stored in compressed form in the navigation data storage medium (200).

3. Navigation system (100) according to Claim 1 or 2,
**characterized in that**
the data storage medium reader (14) is a CD-ROM disc drive, and the navigation data storage medium (200) is a navigation CD-ROM.

4. Method for operation of a navigation system (100) having a navigation computer (10), a data storage medium reader (14) and a navigation data storage medium (200), in which navigation data for possible targets which is stored in the navigation data storage medium is read by means of the data storage medium reader and is transferred to a main memory of the navigation computer,
**characterized in that**
the navigation data is read from the navigation data storage medium sequentially in a single reading process, and is written to the main memory of the navigation computer.

5. Method according to Claim 4,
**characterized in that**
the navigation data is stored in compressed form in the navigation data storage medium.

6. Method according to Claim 4 or 5,
**characterized in that**
a CD-ROM disc drive is used as the data storage medium reader, and a navigation CD-ROM is used as the data storage medium.

7. Navigation data storage medium (200) with navigation data stored in it,
**characterized in that**
the navigation data is stored sequentially in the navigation data storage medium (200) such that the navigation data can be read sequentially in a single reading process.

8. Navigation data storage medium (200) according to Claim 8,
**characterized in that**
the navigation data storage medium (200) is a navigation CD-ROM.

9. Navigation data storage medium (200) according to Claim 8 or 9,
**characterized in that**
the navigation data is stored in compressed form in the navigation data storage medium (200).

10. Method for writing navigation data to a navigation data storage medium,
**characterized in that**
the navigation data is stored in the navigation data storage medium sequentially, immediately successively, and in a form which can be read in a single reading process.

11. Method according to Claim 10,
**characterized in that**
the navigation data storage medium is a navigation CD-ROM.

12. Method according to Claim 10 or 11,
**characterized in that**
the navigation data is compressed before being written to the navigation data storage medium.

## Revendications

1. Système de navigation (100) avec un ordinateur embarqué (10), un lecteur de support de données (14) et un support de données de navigation (200), par lequel des données de navigation enregistrées sur le support de données de navigation (200) pour différentes destinations possibles peuvent être lues à l'aide du lecteur de support de données (14) et mémorisées dans une mémoire centrale de l'ordinateur embarqué (10),
**caractérisé en ce que**
le support de données de navigation (200) est conçu de manière à ce que les données de navigation sur ce support soient enregistrées sous une forme séquentielle pouvant être lue dans une seule opération de lecture.

2. Système de navigation (100) selon la revendication 1,
**caractérisé en ce que**
les données de navigation sont enregistrées sur le support de données de navigation (200) sous une forme compressée.

3. Système de navigation (100) selon la revendication 1 ou 2,
**caractérisé en ce que**
le lecteur de support de données (14) est un lecteur CD-ROM et le support de données de navigation (200) un CD-ROM de navigation.

4. Procédé d'utilisation d'un système de navigation (100) comprenant un ordinateur embarqué (10), un lecteur de support de données (14) et un support de données de navigation (200), selon lequel des données de navigation enregistrées sur le support de données de navigation pour différentes destinations possibles sont lues à l'aide du lecteur de support de données et transférées dans une mémoire centrale de l'ordinateur embarqué,
**caractérisé en ce que**
les données de navigation sont lues par le support de données dans une seule opération de lecture et mémorisées dans la mémoire centrale de l'ordinateur embarqué.

5. Procédé selon la revendication 4,
**caractérisé en ce que**
les données de navigation sont enregistrées sur le support de données de navigation sous une forme compressée.

6. Procédé selon la revendication 4 ou 5,
**caractérisé en ce qu'**
un lecteur CD-ROM est utilisé en tant que lecteur de support de données et un CD-ROM de navigation en tant que support de données.

7. Support de données de navigation (200) avec des données de navigation enregistrées sur ce support,
**caractérisé en ce que**
les données de navigation sur le support de données de navigation (200) sont enregistrées sous une forme séquentielle de manière à pouvoir être lues dans une seule opération de lecture.

8. Support de données de navigation (200) selon la revendication 8,
**caractérisé en ce que**
ce support est un CD-ROM de navigation.

9. Support de données de navigation (200) selon la revendication 8 ou 9,
**caractérisé en ce que**
les données de navigation sont enregistrées sur le support de données (200) sous une forme compressée.

10. Procédé d'inscription sur un support de données de navigation avec des données de navigation,
**caractérisé en ce que**
les données de navigation sont enregistrées sur le support de données de navigation de manière séquentielle, directement à la suite les unes des autres, dans une seule opération de lecture sous une forme lisible.

11. Procédé selon la revendication 10,
**caractérisé en ce que**
le support de données de navigation est un CD-ROM de navigation.

12. Procédé selon la revendication 10 ou 11,
**caractérisé en ce que**
les données de navigation sont compressées sur le support de données de navigation avant l'écriture.
